# EUROPEAN PATENT APPLICATION

(11) **EP 3 915 965 A1**
(43) Date of publication of application: **01.12.2021**
(21) Application number: 21185871.7
(22) Date of filing: 08.02.2017
(51) Int. Cl.: C05G 3/00, C05F 11/00, C05G 3/40, C05G 3/30

(54) **CARBON FERTILIZER FOR AQUATIC PLANTS**

(30) Priority: 19.02.2016 DE 102016102956
(62) Divisional of application: 17703761.1
(71) Applicant: Tetra GmbH, 49324 Melle (DE)
(72) Inventor: BURG, Birgit, Osnabrück (DE); WALLMEIER, Bernd, Ibbenbüren (DE); KELLMANN, Simon, Osnabrück (DE)
(74) Representative: Zimmermann & Partner Patentanwälte mbB

(57) **Abstract**

The present invention relates to a formed body for use as a carbon fertilizer for aquatic plants comprising a biodegradable polymer matrix and a biodegradable carbon source, wherein the biodegradable carbon source is embedded within the biodegradable polymer matrix. The present invention further relates to the manufacture and use of such a formed body.

## Description

### TECHNICAL FIELD

The present invention relates to carbon fertilizers for aquatic plants, such as fertilizers that provide carbon dioxide or carbonic acid for consumption by aquatic plants.

### BACKGROUND

In addition to other nutrients and trace elements, plants require large amounts of carbon (C) to build up their organic mass. While for land plants, carbon is constantly and sufficiently available from the carbon dioxide (CO₂) content of the air, the situation for aquatic plants is very different. Here, the CO₂ dissolved in the water is only available in a significantly lower concentration and cannot be stored in higher concentrations.

To ensure optimal plant growth, as is desired in aquatic systems like an aquarium or pond, the carbon demand needs to be satisfied by continually supplying this nutrient into the water.

In the technical field of aquatic systems, one way to supply carbon to an aquarium or pond is to provide CO₂ from systems including CO₂ gas bottles, wherein the systems continuously emit the CO₂ gas in low doses to the aquarium or pond water. However, such systems require a high technical investment (filled CO₂ pressure bottle, a pressure reducer, a solenoid valve, a timer and/or pH control unit), are technically complex, maintenance-intensive and expensive. Moreover, these systems may also be critical in cases of an improper functioning that might lead to an excessive supply of CO₂. Concentrations of above 30 mg/l CO₂ in aquarium water, however, may lead to serious health problems for the aquatic animals, e.g. fish, kept therein, and may even lead to the death of the kept animals.

Another measure applied for supplying carbon to aquatic plants is the addition of formulations including easily biodegradable organic compounds like citric acid. Biodegradation of these compounds by microorganisms leads to the generation of CO₂ available as a carbon source for aquatic plants. However, these formulations need to be manually added on a regular basis (e.g. weekly) and in adequate amounts, which requires elaborate skills to ensure a continuous and sufficient supply of CO₂ for the aquatic plants.

Accordingly, there still exists the need for an approach for continuously providing sufficient amounts of CO₂ for aquatic plants that is easy to use and does not require high investments in technology.

### SUMMARY

Disclosed herein is a formed body for use as a carbon fertilizer for aquatic plants, wherein the formed body comprises a biodegradable polymer matrix and a biodegradable carbon source, wherein the carbon source is embedded within the polymer matrix. The formed body comprises the biodegradable polymer matrix in a range of from 33 to 90 % by weight of the formed body, and the biodegradable carbon source in a range of from 10 to 67 % by weight of the formed body. The carbon source contains carbon (C) and oxygen (O) in a C:O ratio of 1.4 or less, and the polymer matrix contains carbon (C) and oxygen (O) in a C:O ratio of more than 1.4.

According to a further aspect, the present invention relates to a process for manufacturing a formed body for use as a carbon fertilizer, the process comprising providing a biodegradable polymer containing carbon (C) and oxygen (O) in a C:O ratio of more than 1.4, providing a biodegradable carbon source containing carbon (C) and oxygen (O) in a C:O ratio of 1.4 or less, and embedding the biodegradable carbon source in the biodegradable polymer in amounts such that the biodegradable polymer amounts to 33 to 90 % by weight and such that the biodegradable carbon source amounts to 10 to 67 % by weight, and forming the formed body.

According to a further aspect, the present invention relates to the use of a formed body comprising a biodegradable polymer matrix with a biodegradable carbon source embedded therein as a carbon fertilizer for aquatic plants.

Further aspects, details and embodiments are described in the detailed description and the appended claims.

### DETAILED DESCRIPTION

Reference will now be made in detail to the various examples of the disclosure. Generally, the differences with respect to individual examples are described. The examples are provided by way of explanation of the disclosure and are not meant as a limitation of the disclosure. Further, features illustrated or described as part of one example can be used on or in conjunction with other examples to yield a further example. It is intended that the description includes such modifications and variations. The present disclosure is accordingly not limited to the specifically described examples, but also encompasses all possible combinations of the mentioned examples and features.

According to a first aspect, the present invention relates to a formed body for use as a carbon fertilizer for aquatic plants. Aquatic plants are plants growing in particular under water. Aquatic plants therefore typically need to take up carbon from the surrounding water. Usually, carbon is taken up by the aquatic plants in the form of carbon dioxide (CO₂) that is dissolved in the water. A carbon fertilizer accordingly aims at providing, directly or indirectly, CO₂ to the water in which the aquatic plants grow. Accordingly, the formed body described herein may be used as a carbon fertilizer by adding it to the water of the aquatic plants in order to provide CO₂ to the water.

The formed body comprises a biodegradable polymer matrix, and a biodegradable carbon source, wherein the biodegradable carbon source is embedded within the biodegradable polymer matrix. The term "biodegradable" as used herein refers to a material that is decomposed by the metabolism of aquatic microorganisms; the term "biodegradation" as used herein thus refers to the corresponding process of decomposing a biodegradable material by aquatic microorganisms. A "carbon source" as used herein refers to an organic material containing carbon, for example in the form of carbon compounds. In particular, the carbon source includes carbon in a form that can be metabolized by aquatic microorganisms. A biodegradable carbon source accordingly refers to an organic material that can be decomposed by aquatic microorganisms. A biodegradable polymer matrix refers to a matrix comprising at least one biodegradable polymer. In an embodiment, the biodegradable polymer matrix consists of one or more biodegradable polymers. Accordingly, the polymer matrix comprises a material, and this material of the polymer matrix may be one or more biodegradable polymers. The term "biodegradable polymer", in turn, refers to a polymer containing carbon. In particular, the polymer includes carbon in a form that can be metabolized by aquatic microorganisms. A biodegradable polymer accordingly refers to an organic material that can be decomposed by aquatic microorganisms. The microorganisms can use such biodegradable material as an energy source, and metabolize the carbon compounds contained in this material by consumption of oxygen. As a result of this biodegradation by the aquatic microorganisms, carbon dioxide is released to the surrounding water.

The term "embedded" as used herein describes that the material of the carbon source is present, at least in part, within a matrix provided by the biodegradable polymer matrix. The formed body comprises the biodegradable polymer matrix in a range of from 33 to 90 % by weight of the formed body. Preferably, the polymer matrix amounts to about 40 to about 80% by weight amounts, such as to about 50 to about 70 % by weight, such as about 65 % by weight of the formed body. Further, the formed body comprises the biodegradable carbon source in a range of from 10 to 67 % by weight of the formed body. For example, the formed body may comprise the biodegradable carbon source in a range of from 20 to 60 % by weight of the formed body. Preferably, the carbon source amount to about 30 to about 50 %, such as about 35% by weight of the formed body. In a preferred example, the formed body comprises the material of the polymer matrix in an amount of about 60 to 70 % by weight and the carbon source in an amount of about 30 to 40 % by weight. For example, the formed body may comprise about 65% by weight of the material of the polymer matrix and about 35% by weight of the carbon source. In another example, the formed body may comprise about 35% by weight of the material of the polymer matrix and about 65 % by weight of the carbon source.

With embedding of the carbon source within the polymer matrix, at least a portion of the carbon source in the formed body is only accessible to the aquatic microorganisms after at least a portion of the polymer matrix has been degraded. For example, the carbon source may be embedded in the polymer matrix such that the polymer matrix forms a continuous phase and the carbon source forms a discontinuous phase in the formed body. For example, the carbon source and the material of the polymer matrix may each independently be provided as powder or as granulate, and both may be homogeneously blended or mixed and the formed body may be formed therefrom. With this, a large amount of the material of the carbon source may be present within the formed body in compartments or caverns which are surrounded by the polymer matrix. Some amount of the carbon source material may additionally be present at the surface of the formed body. The carbon source may also be embedded within the polymer matrix in a form in which the polymer matrix, entirely or partially, encases the carbon source. For example, the formed body may be present in the form of a formed body having the shape of a cube, wherein the polymer matrix forms the walls of a closed hollow cube and the carbon source fills the interior of the cube. Of course, such an encasing may as well be achieved by other shapes, for example spheres. As another example, the carbon source may be embedded in a hollow cube formed by the polymer matrix in a way that the interior of the hollow cube includes alternating layers of the material of the polymer matrix and carbon source material. Of course, the formed body of such embodiments as well as of any other embodiments described herein may be provided in other forms as well, such as spheres or foams, as further described below. A further example of embedding a carbon source within a polymer matrix is impregnating a polymer matrix with the carbon source, for example in cases where the carbon source is provided in the form of a gel, a liquid or solution.

By providing the formed body according to the invention, the microbial degradation of the carbon source is controlled by providing the carbon source embedded and thus at least partially trapped in the polymer matrix. For example, adding the formed body to the water of the aquatic system will first lead to the degradation of the polymer matrix and those portions of the carbon source that are accessible for the microorganisms on the outer surface of the formed body. At least another portion of the carbon source, however, is initially not accessible for the microorganisms, because it is embedded within the polymer matrix. Embedding the carbon source within the polymer matrix thus prevents an immediate biodegradation process of the entire amount of carbon source of the formed body in the aquatic system, such as an aquarium. Continuing biodegradation of the polymer matrix, however, then results in that previously inaccessible carbon source material subsequently becomes accessible for biodegradation by the microorganisms. Thus, over time, more material of the carbon source gets accessible for the microorganisms and will be metabolized by the microorganisms such that further CO₂ is released to the water of the aquatic system. With this, a continuous supply of CO₂ over longer periods of time can be achieved by simply adding the herein described formed body to the aquatic system. Too high concentrations of CO₂ in the aquatic system, on the other hand, can be avoided, since not the entire amount of the carbon source of the formed body is initially accessible for the microorganisms, but at least a portion of the polymer matrix will have to be degraded before. Rather, biodegradation of the formed body results in a continuous release of sufficient amounts of CO₂ over time. This also ensures that no explosive microorganism growth occurs due to a sudden provision of high amounts of accessible biodegradable carbon compounds. As derivable from experimental data, with the present invention a continuous, daily CO₂ provision of from about 0.5 to about 1.5g per 1001 aquarium volume (about 5 to about 15 mg/day/liter) can be achieved. Such amounts are sufficient to provide optimum plant growth. Accordingly, the rate at which carbon dioxide is released into the aquatic system is so low that there can be no overdose of CO₂, which might be harmful for the kept animals like fish. Rather, with the formed body according to the present invention, it can be ensured that concentrations of dissolved CO₂ in an aquatic system, for example in an aquarium, of 30 mg/L are not exceeded.

The microorganisms being capable of performing biodegradation of organic compounds in the water of an aquatic system are typically aerobic, heterotrophic bacteria. These microorganisms are capable of degrading organic materials such as the carbon source described herein to CO₂ and H₂O under aerobic conditions. For example, if glucose is provided as the biodegradable carbon source, the biodegradation reaction may be summarized as follows:

C₆H₁₂O₆ + 6 O₂ -> 6 CO₂ + 6 H₂O

According to this example, biodegradation of 1 Mol glucose leads to the release of 6 Mol carbon dioxide to the aquatic system.

According to one embodiment, the formed body consists of the biodegradable polymer matrix and the biodegradable carbon source. According to another embodiment, the formed body additionally comprises one or more additives. In particular, the formed body may further comprise nutrient salts, minerals or trace elements which are additionally required by the microorganisms or provide a benefit to the aquatic system. For example, the formed body may further include phosphorous salts, iron salts, nitrogen salts, vitamins, enzymes, or combinations thereof. A particularly preferred additive is iron(III)citrate. As a trace element, iron or iron complexes promote the microorganisms' metabolism. Further, the particular additive iron(III)citrate has a dark red color, so that this additive (and similar additives) provides the advantage that the homogeneity of the blend of the carbon source with the material of the polymer matrix may be visually controlled when embedding the carbon source within the polymer matrix. Preferably, the one or more additives are present in the formed body in an amount of less than 10% by weight of the formed body, for example between 0.1 and 4% by weight of the formed body, such as about 0.5 %. Providing the formed body with any such one or more additives may help the microorganisms growing on the formed body, because microorganisms require at least some of these compounds to ensure optimal growth and metabolism.

Also the biodegradable polymer matrix can be biodegraded by microorganisms, so that the biodegradation of both, the material of the carbon source and the material of the polymer matrix, may occur due to microorganism metabolism. Having a biodegradable polymer matrix further adds to the aim of providing a formed body for use as a carbon fertilizer in that, in addition to the carbon source, also the polymer matrix holds as a nutrient for microorganisms. Accordingly, also the biodegradation of the polymer matrix can lead to the release and thus provision of carbon dioxide to the water of the aquatic system.

The materials of the carbon source and the polymer matrix may be distinguished from one another by their respective contents of carbon (C) and oxygen (O). In particular, the material of the carbon source and the polymer matrix may be distinguished by their respective ratios between carbon (C) and oxygen (O), C:O. The carbon source of the formed body contains carbon (C) and oxygen (O) in a C:O ratio of 1.4 or less. For example, glucose may be selected as the carbon source. The chemical formula of glucose is C₆H₁₂O₆. Accordingly, the ratio of C:O of glucose is less than 1.4, namely 1. The polymer matrix of the formed body, in contrast, contains carbon (C) and oxygen (O) in a C:O ratio of more than 1.4. In a preferred embodiment, the polymer matrix contains carbon (C) and oxygen (O) in a C:O ratio of 1.5 or more. For example, polycaprolactone (PCL) may be selected as the material of the polymer matrix. The chemical formula of the repeating unit of PCL is C₆H₁₀O₂. Accordingly, the ratio of C:O of PCL is more than 1.4 and even more than 1.5, namely 3. Accordingly, the material of the carbon source typically provides more oxygen per carbon compared to the material of the polymer matrix. It has been discovered that the higher relative content of oxygen in the material of the carbon source renders the carbon source to be easier and thus faster biodegraded by the microorganisms in the water. It is assumed that this is due to the fact that the respective microorganisms in the water body of an aquarium and the like are typically aerobic microorganisms that require oxygen for optimal growth. Accordingly, selecting the material of the carbon source and of the polymer matrix according to their C:O ratio as described above has the effect of obtaining a formed body comprising a material with a higher biodegradation rate embedded in a material with a lower biodegradation rate.

Accordingly, the carbon source and the material of the polymer matrix may be selected such that the carbon source is a material having, as such, a higher biodegradation rate in water than the material of the polymer matrix as such. The biodegradation rate of a material as used herein is understood as the amount (in weight) of material biodegraded over time in water. Biodegradation of a particular material may be measured according to the standardized OECD 301 method (as adopted 17. Jul. 1992). For example, the carbon source may have a biodegradation rate of from 20-80 mg/day/liter, preferably of from 35-65 mg/day/liter, and the material of the polymer matrix may have a biodegradation rate in water of from 2-10 mg/day/liter, preferably of from 3-7 mg/day/liter. In such embodiments, the lower biodegradation rate of the polymer matrix ensures that it takes longer for at least a portion of the embedded carbon source to become accessible for the microorganisms compared to adding just the carbon source to the water without being embedded in the polymer matrix. Only after at least a portion of the polymer matrix with the lower biodegradation rate is degraded, further material of the carbon source becomes accessible for the microorganisms. Accordingly, not all of the material of the carbon source can initially be biodegraded by the microorganisms, which prevents a too fast biodegradation of the added carbon source. At the same time, such a formed body can ensure a continuous supply of the carbon source to the microorganisms, and thus a continuous release of CO₂ to the water of the aquatic system. The lower biodegradation rate of the material of the polymer matrix, in turn, leads to a slower release of CO₂ by microbial degradation, whereas the successively biodegraded carbon source having a higher biodegradation rate, adds to the overall release of CO₂ to the water of the aquatic system. In sum, a slower basis CO₂ supply is achieved by the biodegradation of the polymer matrix, which is continuously increased by a successive biodegradation of the biodegraded carbon source. Preferably, the biodegradation rate of the material of the carbon source is at least two times the biodegradation rate of the material of the polymer matrix. Even more preferred, the biodegradation rate of the material of the carbon source is at least five times the biodegradation rate of the material of the polymer matrix. In further embodiments, the materials may be selected such that the biodegradation rate of the material of the carbon source is at least ten times the biodegradation rate of the material of the polymer matrix.

According to one embodiment, the material of the polymer matrix may be selected from the group consisting of biodegradable polymeric esters, such as polycaprolactone (PCL), polyhydroxy fatty acids, such as polyhydroxybutyrate (PHB), poly lactic acid (PLA), or mixtures thereof. PCL is a preferred material of the polymer matrix. PCL has a C:O ratio of 3. PHB has a C:O ratio of 2. PLA has a C:O ratio of 1.5. Biodegradation of these compounds by aquatic microorganisms leads to a release of CO₂ into the water. The biodegradation rates of these compounds as such in water typically ranges of from about 2 to about 12 mg/day/liter. We measured a biodegradation rate of PCL in aquarium water of about 3-7 mg/day/liter.

According to an embodiment, the carbon source has a molar mass of less than 3600g/mol. According to another embodiment, the carbon source has a molar mass of less than about 2000 g/mol. According to a further embodiment, the carbon source has a molar mass of less than about 1000 g/mol. Having a carbon source with such a low molecular weight is expected to contribute to the effect that the carbon source has a high biodegradation rate. A polymer, in contrast, may typically have a lower biodegradation rate than a carbon source having a low molecular weight such as a molar mass of below 3600 g/mol or below 2000 g/mol or even below 1000g/mol. Accordingly, it is further preferred that the carbon source does not comprise a polyester.

According to a further embodiment, the biodegradable carbon source may be selected from the group consisting of monosaccharides, such as glucose, fructose or galactose, oligosaccharides, such as sucrose or dextrin (e.g., with up to 20 monomer units), or organic acids, such as citric acid, tartaric acid, lactic acid or acetic acid, formic acid, propionic acid or malic acid, or the salts of these organic acids, such as citrates, tartrates, lactates, acetates, formates, propionates or malates. These compounds are easily decomposed by aquatic microorganisms, the biodegradation of which leads to the release of carbon dioxide to the water. Selecting low molecular weight organic compounds as the biodegradable carbon source is preferred, because such low molecular weight compounds are typically easily degraded by microorganisms and thus typically exhibit a higher biodegradation rate in water. In particular, the biodegradation rates of preferred compounds are typically higher (e.g. from about 7mg/day/liter to about 80mg/day/liter) than the biodegradation rates of respective compounds of the above-referred typical materials of the polymer matrix. In a preferred embodiment, glucose is selected as the biodegradable carbon source. Glucose has a C:O ratio of 1.0 and a molar mass of 180,16 g/mol. We measured a biodegradation rate for glucose in an aquarium to be about 30-70 mg/day/liter. In another preferred embodiment, citric acid is selected as the biodegradable carbon source. Citric acid has a C:O ratio of ∼0.86 and a molar mass of 192,13 g/mol. We measured a biodegradation rate for citric acid in an aquarium to also be about 30-70 mg/day/liter. Embedding particular ones of the above-described carbon sources having a higher degradation rate in a particular material of the polymer matrix having a lower biodegradation rate may add to an overall biodegradation rate of the formed body according to the invention of from about 10 mg/day/liter to about 20 mg/day/liter water. Thus, the formed body according to the present invention may accordingly provide carbon dioxide to a 1001 aquarium in an amount of up to about 2 g/day. An average need of CO₂ of such a 100l aquarium is typically estimated to be about 1.5 g/day.

A preferred example is a formed body wherein the carbon source is glucose and the material of the polymer matrix is PCL. Glucose typically has a biodegradation rate in water that is ten times higher than the typical biodegradation rate of PCL in water. Embedding the glucose in a PCL polymer matrix first ensures that not all glucose material is immediately degraded with its higher biodegradation rate when added to the water of the aquatic system. Rather, at least a portion of the embedded glucose will only be accessible for microbial biodegradation once at least a portion of the PCL polymer matrix has been degraded. Accordingly, the overall biodegradation rate of this preferred exemplary formed body over time is provided by the biodegradation rate of the PCL and the higher biodegradation rate of the embedded carbon source glucose once it is accessible for the microorganisms.

A process for manufacturing the formed body typically comprises: providing a biodegradable polymer, providing a biodegradable carbon source, and embedding the biodegradable carbon source in the biodegradable polymer, wherein the biodegradable polymer contains carbon (C) and oxygen (O) in a C:O ratio of more than 1.4, and wherein the biodegradable carbon source contains carbon (C) and oxygen (O) in a C:O ratio of 1.4 or less, and forming the formed body. Moreover, the amounts of carbon source material and material of the polymer matrix are selected such that the formed body comprises the biodegradable polymer matrix in a range of from 33 to 90 % by weight of the formed body, and the biodegradable carbon source in a range of from 10 to 67 % by weight of the formed body.

By embedding the biodegradable carbon source in the biodegradable material of the polymer matrix, the resulting formed body includes the biodegradable polymer material as a matrix with the carbon source material embedded therein. The biodegradable carbon source may be provided in crystalline form, as a powder, a granulate, a liquid, a gel, a suspension or a solution. Also the biodegradable material of the polymer matrix may be provided as a powder, a granulate, a liquid, a gel, a suspension or a solution. In one example, one or both of the material of the carbon source and the material of the polymer matrix are provided in the form of fine granules (having a diameter of, e.g., about 300 µm to about 600 µm).

The step of embedding may comprise mixing or blending the biodegradable carbon source and the biodegradable material of the polymer matrix, and then the formed body is formed. The formed body may thus be formed from a blend of the biodegradable material of the polymer matrix and the biodegradable carbon source. In some embodiments, one or more additives are additionally provided, and the carbon source, the material of the polymer matrix and the one or more additives are blended or mixed and the formed body is formed from this blend. If PCL is selected as the material of the biodegradable polymer matrix and glucose is selected as the carbon source, both compounds may be provided as a granulate and mixed in a ratio of PCL:glucose of 70:30 % by weight with each other. This leads to a homogeneous mixture in which the glucose is embedded within the PCL. This mixture may further be processed by techniques well known in the art to form the formed body, e.g. as a solid body. For example such forming may be achieved by tempering, injection-molding, meltblowing, and the like. With this, the formed body may, for example, have the shape of a sphere. A preferred shape of the formed body is like that of the product "Balance Balls", available from Tetra GmbH, Melle, Germany. Of course, formed bodies of other shapes may as well be produced, such as, for example, discs, strips, cubes, grids, foams, nonwovens or coatings. If tempering is performed, the above described blend comprising the carbon source and the material of the polymer matrix and optionally one or more additives may be filled in forms giving the body to be formed its final form. Depending on the granulate size of the carbon source and/or the material of the polymer matrix, smaller or larger compartments of the carbon source may be created which are embedded in the polymer matrix in the resulting formed body. Such a compartment may therefore consist of the carbon source.

Instead of or in addition to blending the carbon source and the material of the polymer matrix, the formed body may be prepared in a way such that it is in the form of a solid body including layers of the biodegradable carbon source. For example, the carbon source may be embedded in the polymer matrix in that a layer of the materia! of the polymer matrix is coated by a layer of the carbon source material, which in turn may optionally be coated with a further layer of the material of the polymer matrix substance. In a formed body with any number of such alternating layers, the carbon source is also considered to be embedded within the polymer matrix.

"Embedding" the biodegradable carbon source in the biodegradable material of the polymer matrix may thus be understood according to one embodiment to be performed such that at least a portion of the biodegradable carbon source is only accessible for microorganisms after at least a portion of the biodegradable polymer matrix has been degraded.

As a further example, embedding may also be performed by impregnating a biodegradable polymer matrix, e.g. provided as a foam or porous solid body, with a gel or solution or suspension comprising the biodegradable carbon source.

Biodegradation of the formed body is performed by aquatic microorganisms using the formed body as a source of carbon. To this, the microorganism will colonize the surface of the formed body that is accessible. A larger surface area (i.e. the surface area accessible for the microorganisms) thereby allows more microorganisms to colonize on the formed body. In preferred embodiments, the formed body therefore has a surface area of at least 0.6 cm² per gram of the formed body, preferably at least about 0.8 cm² per gram of the formed body or at least about 3 cm² per gram of the formed body, and most preferred at least between about 10 to about 20 cm² per gram of the formed body, such as about 13.3 cm² per gram of the formed body. Such surface areas per gram of the formed body provide for a fast colonialization of a sufficient amount of microorganisms to achieve sufficient levels of CO₂ release by biodegradation of the formed body.

The formed body described herein comprising a biodegradable polymer matrix with a biodegradable carbon source embedded therein can be used as a carbon fertilizer for aquatic plants. To this, the formed body may be added to the water in which the aquatic plants are present, such as an aquatic system (e.g., aquarium or pond). Since the aquatic microorganisms that biodegrade the formed body are typically aerobic microorganisms, it is preferred that the formed body is added to a region of the aquatic system where higher oxygen contents in the water are expected.

In one embodiment, it is therefore preferred to introduce the formed body in the water in which the aquatic plants are present in a filter region. For example, the formed body may be introduced in the region where typically the filtering material of a filter apparatus is disposed. Typical flow-through rates of filters used for aquatic systems such as aquariums or ponds are between 600 to 1300 L/h. Advantageously, the formed body may be provided in a form suitable for being introduced in the filter system of the aquatic system. For example, the formed body may be provided in a solid form which, in addition to functioning as a carbon fertilizer as described above, also provides the function of physical filtering of particles having a particular size. Accordingly, the formed body as described herein may be provided in the form of and/or used as a filter material of a filter body of the filter system of an aquatic system, e.g. in an aquarium filter. As already described above, disposing the formed body as described herein in the filter system of the aquatic system has the further benefit that this particular region of the aquatic system is typically oxygen-rich which further promotes the aerobic decomposition of the formed body described herein by the microorganisms. When used in the filter system of an aquatic system, the formed body as described herein may also be used just as loose bulk material filled into the filter system.

Alternatively, the formed body as described herein may also be added to the water of the aquatic system in another region. For example, the formed body may be added directly to the water body in which the plants are kept. This has the advantage that visual inspection of the amount of formed body left in the aquatic system may be performed more easily.

As a further alternative, the formed body as described herein may be used in an extra reactor that is provided independently of the filter system of the aquatic system. For example, this reactor may solely function as a carbon fertilizer system. To this, water from the aquatic system may be supplied to the reactor, and biodegradation of the formed body in the reactor may lead to a CO₂ release to the water which again is supplied back to the aquarium water. This process may be a continuous process, similar to the filtering process usually applied in aquatic systems such as aquariums. The reactor may further be specifically optimized for microorganisms to conduct the biodegradation of the formed body, which may be provided as a medium inside the reactor. Thus, the present invention further relates to a reactor including the formed body as described herein.

In an experimental setup, formed bodies of different shapes were obtained as follows: 83 g of polycaprolactone (PCL), 43 g of glucose and 0.62 g of iron(III)citrate were provided as finely granulated granulates having a size of between about 300 µm and 600 µm. These components were physically mixed until a homogenous mixture was obtained. The homogeneity of the mixture could thereby be controlled by homogeneous distribution of the dark red color of the iron(III)citrate. The resulting mixture thus contained 65.5% by weight PCL, 34% by weight glucose and 0.5% by weight iron(III)citrate. The resulting mixture was then placed in shaping molds made of silicone, aluminum or Teflon coated sheets. The shaping molds thereby hold as matrices for the desired final shape of the formed body. The filled shaping molds were then placed in 70°C to 75°C for about 1 to 2 hours. Under these conditions, the PCL melts and encases the remaining solid particles of the mixture. Thus, in the present example, the glucose becomes embedded in a PCL matrix. The formed bodies are cooled at room temperature. The cooling solidifies the formed bodies. Further layers of either the glucose or PCL or any mixtures thereof may be added to the thus obtained formed body, e.g. including a different composition of the material of the polymer matrix and the carbon source material, by placing the formed body back into a shaping mold and adding a further mixture on top of it and repeating the heating and cooling steps. The formed bodies may be added as such to the water of the aquatic system to be used as a carbon fertilizer.

In other examples, the formed bodies comprised 70% by weight PCL and 30% by weight glucose, or 50% by weight PCL and 50% by weight glucose, or 35% by weight PCL and 65% by weight glucose. In another example, the formed bodies comprised 40% by weight PCL and 60% by weight glucose. Similarly, in still further examples, the formed bodies comprised 70% by weight PCL and 30% by weight citric acid, or 50% by weight PCL and 50% by weight citric acid, or 35% by weight PCL and 65% by weight citric acid. In another example, the formed bodies comprised 40% by weight PCL and 60% by weight citric acid. The biodegradation rate in aquarium water of all of these examples was between about 10 and about 15 mg/day/liter and thus in the desired range. With this, a continued and sufficient supply of CO₂ to the aquatic system can be provided by the biodegradation of the formed bodies of the present invention.

Accordingly, with the formed body as described herein a self-governing, biological process for the provision of CO₂ to an aquatic system is provided, which continuously provides sufficient amounts of CO₂ but requires only minimal maintenance.

This written description uses examples to disclose the invention, including the preferred examples, and also to enable any person skilled in the art to practice the invention, including making and using any products or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspect can be mixed and matched by one of ordinary skill in the art to construct additional examples and techniques in accordance with principles of this application.

Further disclosed herein is the subject-matter of the following clauses:
1. Formed body for use as a carbon fertilizer for aquatic plants, comprising:
   a biodegradable polymer matrix in a range of from 33 to 90 % by weight of the formed body, and a biodegradable carbon source in a range of from 10 to 67 % by weight of the formed body, wherein the carbon source is embedded within the polymer matrix,
   and wherein the carbon source contains carbon (C) and oxygen (O) in a C:O ratio of 1.4 or less,
   and wherein the polymer matrix contains carbon (C) and oxygen (O) in a C:O ratio of more than 1.4.
2. Formed body according to clause 1, wherein the polymer matrix contains carbon (C) and oxygen (O) in a C:O ratio of 1.5 or more.
3. Formed body according to any of the preceding clauses, comprising the biodegradable polymer matrix in a range of from 40 to 80 % by weight of the formed body, and a biodegradable carbon source in a range of from 20 to 60 % by weight of the formed body.
4. Formed body according to any of the preceding clauses, wherein the biodegradation rate of the carbon source as such in water is higher than the biodegradation rate of the material of the polymer matrix as such in water.
5. Formed body according to clause 4, wherein the biodegradation rate of the material of the carbon source is at least two times, preferably at least 5, and even more preferred at least 10 times, of the biodegradation rate of the material of the polymer matrix.
6. Formed body according to any of the preceding clauses wherein the carbon source has a molar mass of less than 3600g/mol.
7. Formed body according to any of the preceding clauses, wherein the carbon source does not comprise a polyester, and/or wherein the carbon source has a molar mass of less than 1000g/mol.
8. Formed body according to any of the preceding clauses, wherein the formed body consists of the biodegradable polymer matrix and the biodegradable carbon source, or wherein the formed body consists of the biodegradable polymer matrix and the biodegradable carbon source and one or more additives.
9. Formed body according to any of the preceding clauses, wherein the formed body is in the form of a sphere, disc, strip, cube, grid, foam, nonwoven or coating.
10. Formed body according to any of the preceding clauses, wherein the formed body has a surface area of at least 0.8 cm² per gram of the formed body, preferably at least about 3 cm² per gram of the formed body, and most preferred at least between about 10 to about 20 cm² per gram of the formed body, such as about 13.3 cm² per gram of the formed body.
11. Formed body according to any of the preceding clauses, wherein the formed body is formed from a blend of the material of the polymer matrix and the biodegradable carbon source, or wherein the formed body comprises the polymer matrix including layers of the biodegradable carbon source, or wherein the formed body comprises the polymer matrix including compartments of the biodegradable carbon source.
12. Formed body according to any of the preceding clauses, wherein the material of the polymer matrix is selected from the group consisting of biodegradable polymeric esters, such as polycaprolactone (PCL), polyhydroxy fatty acids, such as polyhydroxybutyrate (PHB), poly lactic acid (PLA), or mixtures thereof.
13. Formed body according to any of the preceding clauses, wherein the biodegradable carbon source is selected from the group consisting of monosaccharides, such as glucose, fructose or galactose, oligosaccharides, such as sucrose or dextrin, or organic acids, such as citric acid, tartaric acid, lactic acid or acetic acid, formic acid, propionic acid or malic acid, or the salts of these organic acids, such as citrates, tartrates, lactates, acetates, formates, propionates or malates.
14. Formed body according to any of the preceding clauses, wherein the carbon source as such has a biodegradation rate in water of from 20-80 mg/day/liter, preferably of from 35-65 mg/day/liter, and wherein the material of the polymer matrix as such has a biodegradation rate in water of from 2-12 mg/day/liter, preferably of from 3-7 mg/day/liter.
15. Formed body according to any of the preceding clauses, wherein the formed body comprises glucose embedded in a PCL matrix or wherein the formed body comprises citric acid embedded in a PCL matrix, wherein the formed body optionally further comprises the additive iron(III)citrate.
16. Process for manufacturing a formed body for use as a carbon fertilizer, the process comprising:
   providing a biodegradable polymer containing carbon (C) and oxygen (O) in a C:O ratio of more than 1.4,
   providing a biodegradable carbon source containing carbon (C) and oxygen (O) in a C:O ratio of 1.4 or less,
   embedding the biodegradable carbon source in the biodegradable polymer in amounts such that the biodegradable polymer amounts to 33 to 90 % by weight and such that the biodegradable carbon source amounts to 10 to 67 % by weight, and
   forming the formed body.
17. Process according to clause 16, wherein providing the biodegradable carbon source comprises providing the biodegradable carbon source in crystalline form, as a powder, as a granulate, as a liquid, as a gel, as a suspension or as a solution, and wherein providing the biodegradable polymer comprises providing the biodegradable polymer as a powder, as a granulate, as a liquid, as a gel, as a suspension or as a solution.
18. Process according to clauses16 or 17, wherein embedding the biodegradable carbon source in the biodegradable polymer comprises mixing or blending the biodegradable carbon source and the biodegradable polymer, or comprises impregnating the biodegradable polymer with a gel or solution or suspension comprising the biodegradable carbon source, or comprises providing alternating layers of the biodegradable carbon source and the biodegradable polymer.
19. Process according to any of clauses 16 to 18, wherein embedding the biodegradable carbon source in the biodegradable polymer is performed such that at least a portion of the biodegradable carbon source is only accessible for microorganisms after at least a portion of the biodegradable polymer has been degraded.
20. Use of a formed body according to any of clauses 1 to 15 as a carbon fertilizer for aquatic plants.
21. Use according to clause 20, wherein the formed body is added to water in which the aquatic plants are present.

## Claims

1. Formed body for use as a carbon fertilizer for aquatic plants, comprising:
a biodegradable polymer matrix in a range of from 33 to 90 % by weight of the formed body, and a biodegradable carbon source in a range of from 10 to 67 % by weight of the formed body, wherein the carbon source is embedded within the polymer matrix,
and wherein the carbon source contains carbon (C) and oxygen (O) in a C:O ratio of 1.4 or less,
and wherein the polymer matrix contains carbon (C) and oxygen (O) in a C:O ratio of more than 1.4.

2. Formed body according to claim 1, wherein the polymer matrix contains carbon (C) and oxygen (O) in a C:O ratio of 1.5 or more, and/or wherein the formed body comprises the biodegradable polymer matrix in a range of from 40 to 80 % by weight of the formed body, and a biodegradable carbon source in a range of from 20 to 60 % by weight of the formed body.

3. Formed body according to any of the preceding claims, wherein the biodegradation rate of the carbon source as such in water is higher than the biodegradation rate of the material of the polymer matrix as such in water, wherein typically the biodegradation rate of the material of the carbon source is at least two times, preferably at least 5, and even more preferred at least 10 times, of the biodegradation rate of the material of the polymer matrix.

4. Formed body according to any of the preceding claims, wherein the carbon source has a molar mass of less than 3600g/mol, and/or wherein the carbon source does not comprise a polyester, and/or wherein the carbon source has a molar mass of less than 1000g/mol.

5. Formed body according to any of the preceding claims, wherein the formed body consists of the biodegradable polymer matrix and the biodegradable carbon source, or wherein the formed body consists of the biodegradable polymer matrix and the biodegradable carbon source and one or more additives, and/or wherein the formed body is in the form of a sphere, disc, strip, cube, grid, foam, nonwoven or coating.

6. Formed body according to any of the preceding claims, wherein the formed body has a surface area of at least 0.8 cm² per gram of the formed body, preferably at least about 3 cm² per gram of the formed body, and most preferred at least between about 10 to about 20 cm² per gram of the formed body, such as about 13.3 cm² per gram of the formed body.

7. Formed body according to any of the preceding claims, wherein the formed body is formed from a blend of the material of the polymer matrix and the biodegradable carbon source, or wherein the formed body comprises the polymer matrix including layers of the biodegradable carbon source, or wherein the formed body comprises the polymer matrix including compartments of the biodegradable carbon source.

8. Formed body according to any of the preceding claims, wherein the material of the polymer matrix is selected from the group consisting of biodegradable polymeric esters, such as polycaprolactone (PCL), polyhydroxy fatty acids, such as polyhydroxybutyrate (PHB), poly lactic acid (PLA), or mixtures thereof, and/or wherein the biodegradable carbon source is selected from the group consisting of monosaccharides, such as glucose, fructose or galactose, oligosaccharides, such as sucrose or dextrin, or organic acids, such as citric acid, tartaric acid, lactic acid or acetic acid, formic acid, propionic acid or malic acid, or the salts of these organic acids, such as citrates, tartrates, lactates, acetates, formates, propionates or malates.

9. Formed body according to any of the preceding claims, wherein the carbon source as such has a biodegradation rate in water of from 20-80 mg/day/liter, preferably of from 35-65 mg/day/liter, and wherein the material of the polymer matrix as such has a biodegradation rate in water of from 2-12 mg/day/liter, preferably of from 3-7 mg/day/liter.

10. Formed body according to any of the preceding claims, wherein the formed body comprises glucose embedded in a PCL matrix or wherein the formed body comprises citric acid embedded in a PCL matrix, wherein the formed body optionally further comprises the additive iron(III)citrate.

11. Process for manufacturing a formed body for use as a carbon fertilizer, the process comprising:
providing a biodegradable polymer containing carbon (C) and oxygen (O) in a C:O ratio of more than 1.4,
providing a biodegradable carbon source containing carbon (C) and oxygen (O) in a C:O ratio of 1.4 or less,
embedding the biodegradable carbon source in the biodegradable polymer in amounts such that the biodegradable polymer amounts to 33 to 90 % by weight and such that the biodegradable carbon source amounts to 10 to 67 % by weight, and
forming the formed body.

12. Process according to claim 11, wherein providing the biodegradable carbon source comprises providing the biodegradable carbon source in crystalline form, as a powder, as a granulate, as a liquid, as a gel, as a suspension or as a solution, and wherein providing the biodegradable polymer comprises providing the biodegradable polymer as a powder, as a granulate, as a liquid, as a gel, as a suspension or as a solution.

13. Process according to claim 11 or 12, wherein embedding the biodegradable carbon source in the biodegradable polymer comprises mixing or blending the biodegradable carbon source and the biodegradable polymer, or comprises impregnating the biodegradable polymer with a gel or solution or suspension comprising the biodegradable carbon source, or comprises providing alternating layers of the biodegradable carbon source and the biodegradable polymer, or wherein embedding the biodegradable carbon source in the biodegradable polymer is performed such that at least a portion of the biodegradable carbon source is only accessible for microorganisms after at least a portion of the biodegradable polymer has been degraded.

14. Use of a formed body according to any of claims 1 to 10 as a carbon fertilizer for aquatic plants, wherein the formed body is typically added to water in which the aquatic plants are present.

15. Method of fertilizing aquatic plants, comprising:
providing the formed body according to any of claims 1-10,
adding the formed body to water in which aquatic plants are present.
